# EUROPÄISCHE PATENTSCHRIFT

(11) **EP 2 233 713 B1**
(45) Veröffentlichungstag und Bekanntmachung des Hinweises auf die Patenterteilung: **01.10.2014**
(21) Anmeldenummer: 10152736.4
(22) Anmeldetag: 05.02.2010
(51) Int. Cl.: F01N 3/20, F01N 11/00

(54) **Verfahren zum Betrieb eines SCR-Katalysators**
Method for operating an SCR catalytic converter
Procédé de commande d'un catalyseur SCR

(30) Priorität: 23.03.2009 DE 102009001736
(43) Veröffentlichungstag der Anmeldung: 29.09.2010
(73) Patentinhaber: Robert Bosch GmbH, 70442 Stuttgart (DE)
(72) Erfinder: Lolas, Georgios, 70182 Stuttgart (DE); Klenk, Wolfgang, 74369 Loechgau (DE); Wagner, Andreas, 70563 Stuttgart (DE)

(56) Entgegenhaltungen:
- EP-A2- 2 161 422
- WO-A1-2010/054733
- DE-A1-102006 053 383
- US-A1- 2007 079 601

## Beschreibung

Die vorliegende Erfindung betrifft ein Verfahren zum Betrieb eines SCR-Katalysators zur Nachbehandlung von Abgasen einer Brennkraftmaschine, wobei ein beheizbarer Reduktionsmitteltank für das erforderliche flüssige Reduktionsmittel vorgesehen ist und der Tankheizer eine PTC-Charakteristik aufweist. Weitere Gegenstände der vorliegenden Erfindung sind ein Computerprogramm und ein Computerprogrammprodukt, die zur Durchführung des Verfahrens geeignet sind.

### Stand der Technik

Es sind Verfahren und Vorrichtungen zum Betreiben einer Brennkraftmaschine bekannt, in deren Abgasbereich ein SCR-Katalysator (Selective Catalytic Reduction) angeordnet ist, der die im Abgas der Brennkraftmaschine enthaltenen Stickoxide (NOx) in Gegenwart eines Reduktionsmittels zu Stickstoff reduziert. Hierdurch können die Stickoxide im Abgas erheblich vermindert werden. Es werden bevorzugt Stickoxide (NO, NO₂) reduziert, während unerwünschte Nebenreaktionen weitgehend unterdrückt werden. Für den Ablauf der Reaktion wird Ammoniak (NH₃) benötigt, das dem Abgas zugemischt wird. Als Reduktionsmittel werden in der Regel NH₃-abspaltende Reagenzien eingesetzt. Oftmals wird wässrige Harnstofflösung verwendet.

Die für die Abgasnachbehandlung erforderliche wässrige Harnstofflösung (HWL) wird in einem Reduktionsmitteltank vorgehalten und über eine Reduktionsmitteldosiereinrichtung bedarfsorientiert in den Abgastrakt eingesprüht. Je nach zugesetztem Frostschutzmittel gefriert die wässrige Harnstofflösung bei -11 °C oder niedrigeren Temperaturen. Zum Auftauen der wässrigen Harnstofflösung ist in der Regel ein Tankheizer vorgesehen. Sofern die wässrige Harnstofflösung vollständig gefroren ist, kann der Systemstart verzögert werden, um in dieser Zeit eine erforderliche Menge der Harnstofflösung aufzutauen. Sofern im Tank eine Temperatur erkannt wird, die kleiner als die Gefrierschwelle ist, wird der Tankheizer aktiviert, sodass zumindest eine Mindestmenge der wässrigen Harnstofflösung aufgetaut werden kann. Herkömmlicherweise werden in einem Tankheizer ohmsche Heizelemente sowie PTC-Elemente verbaut. PTC-Elemente sind elektrische Widerstände mit temperaturabhängigem Verhalten. Der Widerstand eines PTC-Elements wächst mit steigender Temperatur an, sodass der Stromfluss abnimmt. Hierdurch wird sichergestellt, dass eine starke Überhitzung oder Dauerbestromung nicht stattfindet.

In der Offenlegungsschrift WO 2010/054733 A1 ist ein PTC-Heizelement beschrieben, welches in einem Tank angeordnet ist, welcher eine Harnstoff-Wasser-Lösung aufnimmt. Das PTC-Heizelement übernimmt gleichzeitig die Funktion eines Temperatursensors, um ein Einfrieren der Harnstoff-Wasser-Lösung zu detektieren. Hierzu wird der elektrische Widerstand des PTC-Heizelements aus dem durch das PTC-Heizelement fließenden Strom und dessen Betriebsspannung ermittelt und anschließend in eine Temperatur umgerechnet.

In der Offenlegungsschrift EP 2 161 422 A2 ist ein Kupfer-Heizelement beschrieben, welches zur Beheizung einer in einem Tank gelagerten Harnstoff-Wasser-Lösung vorgesehen ist. Anhand einer Bewertung des elektrischen Widerstands des Kupfer-Heizelements kann eine Unterscheidung zwischen einer flüssigen Harnstoff-Wasser-Lösung und einer eingefrorenen Harnstoff-Wasser-Lösung vorgenommen werden. Hierzu wird der zeitliche Verlauf des elektrischen Widerstands des Kupfer-Heizelements ermittelt und bewertet. Ein niedriger Temperatur-Gradient tritt bei einer flüssigen Harnstoff-Wasser-Lösung auf. Dagegen wird bei einer eingefrorenen Harnstoff-Wasser-Lösung, bei welcher Luft-Kavitäten vorliegen, aufgrund des stark erhöhten Wärme-Übergangs-Widerstands ein erheblich höherer Temperatur-Gradient erwartet.

Problematisch bei einem Reduktionsmitteltank mit durchgefrorener Harnstofflösung ist, dass bei einem verhältnismäßig kurzen Fahrzyklus, beispielsweise weniger als zwei bis drei Stunden, die über den Tankheizer eingebrachte Wärmeleistung nur ein begrenztes Volumen des Reduktionsmittels um den Heizer herum auftauen kann. Von diesem Volumen wird ein Teil über die Reduktionsmitteldosiereinrichtung entnommen und in den Abgastrakt zur Abgasnachbehandlung eingesprüht. Durch die Entnahme des flüssigen Reduktionsmittels entsteht eine Kavität, insbesondere eine Gasblase bzw. Luftblase im Bereich des Tankheizers. Sofern die Harnstofflösung im Tank anschließend wieder durchfriert und sich dieser Vorgang mehrmalig wiederholt, vergrößert sich die Kavität, sodass der Tankheizer im weiteren Verlauf größtenteils von Gas bzw. Luft umgeben ist. Dies hat zur Folge, dass der Wärmestrom in dem Reduktionsmitteltank über die Luftisolierung stark abnimmt und nicht mehr genügend Reduktionsmittel aufgetaut werden kann. Der Systemdruck bricht ein und eine Dosierung des Reduktionsmittels in den Abgastrakt ist nicht mehr möglich. Dies führt in der Regel zu einer OBD (On Board Diagnose)-relevanten Fehlermeldung.

Die Erfindung stellt sich die Aufgabe, eine Lösung für dieses Problem bereitzustellen und die Funktionsfähigkeit des SCR-Katalysators auch bei tiefen Temperaturen zu gewährleisten.

Diese Aufgabe wird durch ein Verfahren zum Betrieb eines SCR-Katalysators gelöst, wie es in den Ansprüchen 1 und 2 beschrieben ist. Bevorzugte Ausgestaltungen dieses Verfahrens sind in den Unteransprüchen angegeben.

### Offenbarung der Erfindung

### Vorteile der Erfindung

Das erfindungsgemäße Verfahren gemäß einer ersten Ausführung ist zum Betrieb eines SCR-Katalysators zur Nachbehandlung von Abgasen einer Brennkraftmaschine vorgesehen, wobei ein Reduktionsmitteltank mit Reduktionsmittel und eine Reduktionsmitteldosiereinrichtung vorgesehen sind. Der Reduktionsmitteltank weist wenigstens einen Tankheizer zum Auftauen von gefrorener Reduktionsmittellösung auf, wobei der Tankheizer eine PTC-Charakteristik aufweist. Das erfindungsgemäße Verfahren ist dadurch gekennzeichnet, dass zur Erkennung von Kavitäten im Reduktionsmitteltank, die durch Entnahme von flüssigem Reduktionsmittel bei nur teilweise aufgetautem Reduktionsmittel im Tank zustande kommen, eine den Heizerstrom charakterisierende Größe erfasst wird und aus einem Abweichen des oder der erfassten Werte(s) für die den Heizerstrom charakterisierende Größe von einem vorgebbaren Referenzwert auf das Vorhandensein von Kavitäten geschlossen wird. Hierbei repräsentiert der oder die Referenzwert(e) einen Reduktionsmitteltank ohne Kavitäten, also ohne beispielsweise Gasblasen- oder Lufteinschlüsse.

Als die den Heizerstrom charakterisierende Größe wird der Strom, insbesondere ein Strommaximum, erfasst. Bei steigender Temperatur des Tankheizers sinkt der Stromfluss des Heizers, sodass bei Unterschreiten eines vorgebbaren Referenzwertes (Iₛ) bzw. einer vorgebbaren Schwelle auf das Vorhandensein von einer oder mehreren Kavitäten bzw. Gaseinschlüssen geschlossen wird. Der Abgleich von aktuellem Messwert und Referenzwert erfolgt insbesondere innerhalb eines vorgebbaren Zeitintervalls.

Das erfindungsgemäße Verfahren gemäß einer anderen Ausführung ist ebenfalls zum Betrieb eines SCR-Katalysators zur Nachbehandlung von Abgasen einer Brennkraftmaschine vorgesehen, wobei ein Reduktionsmitteltank mit Reduktionsmittel und eine Reduktionsmitteldosiereinrichtung vorgesehen sind. Der Reduktionsmitteltank weist wenigstens einen Tankheizer zum Auftauen von gefrorener Reduktionsmittellösung auf, wobei der Tankheizer eine PTC-Charakteristik aufweist.. Das erfindungsgemäße Verfahren ist dadurch gekennzeichnet, dass zur Erkennung von Kavitäten im Reduktionsmitteltank, die durch Entnahme von flüssigem Reduktionsmittel bei nur teilweise aufgetautem Reduktionsmittel im Tank zustande kommen, eine den Heizerstrom charakterisierende Größe erfasst wird und aus einem Abweichen des oder der erfassten Werte(s) für die den Heizerstrom charakterisierende Größe von einem vorgebbaren Referenzwert auf das Vorhandensein von Kavitäten geschlossen wird. Hierbei repräsentiert der oder die Referenzwert(e) einen Reduktionsmitteltank ohne Kavitäten, also ohne beispielsweise Gasblasen- oder Lufteinschlüsse.

Vor der Erfassung einer den Heizerstrom charakterisierenden Größe wird der Tankheizer vermessen, indem bei vorgebbaren Bedingungen die PTC-Charakteristik bestimmt wird. Hierdurch kann die Exemplarstreuung der Heizleistung des jeweiligen verbauten Tankheizers berücksichtigt werden und geeignete Referenzwerte bzw. Vergleichswerte können bestimmt und bereitgestellt werden.

Die erfindungsgemäßen Vorgehensweisen beruhen auf der Erkenntnis, dass bei einem Tankheizer mit PTC-Charakteristik bei steigender Oberflächentemperatur des Heizers der Widerstand ansteigt bzw. der Heizerstrom sinkt. Bei beginnender Kavität im Bereich des Tankheizers kann der Heizer nicht mehr genügend Wärme in das Medium abgeben, sodass sich die Oberfläche des Tankheizers aufheizt und sich entsprechend der PTC-Charakteristik des Tankheizers der Stromfluss reduziert. Bei sich vergrößernder Kavität verstärkt sich der Effekt. Daher lässt sich durch Erfassung einer den Heizerstrom charakterisierenden Größe und dem Vergleich dieser Größe mit einem Referenzwert auf das Vorhandensein einer Kavität bzw. einer Gasblase und gegebenenfalls deren Ausmaße schließen.

Gemäß einer bevorzugten Ausgestaltung dieser Ausführung wird als die den Heizerstrom charakterisierende Größe der Widerstand, insbesondere ein Widerstandsminimum, des Tankheizelements erfasst. Da bei steigender Temperatur des Tankheizers der Widerstand steigt, wird in dieser Ausführungsform bei einem Überschreiten einer vorgebbaren Schwelle bzw. eines vorgebbaren Referenzwertes (Rₛ) auf das Vorhandensein von Kavitäten geschlossen. Der Abgleich von aktuellem Messwert und Referenzwert erfolgt insbesondere innerhalb eines vorgebbaren Zeitintervalls.

Bevorzugterweise erfolgt die Prüfung auf das Vorhandensein von Kavitäten kontinuierlich zumindest im Winterbetrieb, wenn die Heizung des SCR-Systems ständig läuft. Daneben kann eine punktuelle Überwachung auf das Vorhandensein von Kavitäten durchgeführt werden, beispielsweise direkt nach einem Motorstart bzw. einem Kaltstart. Gegebenenfalls kann eine Überwachung zu einem definierten und vorgebbaren Zeitpunkt genauer sein, da hierbei von definierten Startbedingungen ausgegangen werden kann. Vorzugsweise wird eine punktuelle Überwachung zu einem definierten Zeitpunkt zusätzlich zur kontinuierlichen Überwachung vorgenommen.

Wenn erfindungsgemäß eine oder mehrere Kavitäten erkannt wird/werden, werden vorzugsweise eine oder mehrere Reaktionen ausgelöst, um die Funktionsfähigkeit des Systems zu sichern oder wiederherzustellen. Insbesondere wird bei erkannten Kavitäten die Reduktionsmitteldosiermenge begrenzt und/oder gestoppt, die Förderung von Reduktionsmittel aus dem Reduktionsmitteltank wird verringert und/oder gestoppt und/oder es wird Reduktionsmittel in den Reduktionsmitteltank zurückgefördert.

Die Erfindung umfasst weiterhin ein Computerprogramm, das alle Schritte des erfindungsgemäßen Verfahrens ausführt, wenn es auf einem Rechengerät oder einem Steuergerät abläuft.

Schließlich umfasst die Erfindung ein Computerprogrammprodukt mit Programmcode, der auf einem maschinenlesbaren Träger gespeichert ist, zur Durchführung des erfindungsgemäßen Verfahrens, wenn das Programm auf einem Computer oder einem Steuergerät ausgeführt wird.

Bei dem Steuergerät handelt es sich insbesondere um das Steuergerät einer Brennkraftmaschine, der ein SCR-Katalysator zur Nachbehandlung der Abgase der Brennkraftmaschine zugeordnet ist, wobei ein Reduktionsmitteltank vorgesehen ist, der erfindungsgemäß auf Kavitäten überprüft wird.

Weitere Merkmale und Vorteile der Erfindung ergeben sich aus der nachfolgenden Beschreibung der Figuren im Zusammenhang mit den Ausführungsbeispielen. Hierbei können die verschiedenen Merkmale jeweils für sich oder in Kombination miteinander verwirklicht sein.

### Kurze Beschreibung der Zeichnungen

In den Zeichnungen zeigen:
- Fig. 1: Kennlinie eines PTC-Heizelements eines Tankheizers;
- Fig. 2: schematische Darstellung eines Reduktionsmitteltanks mit gefrorenem Medium und Kavitätsbildung um die Ansaugstelle und
- Fig. 3: schematisches Ablaufdiagramm zur Durchführung des erfindungsgemäßen Verfahrens.

### Beschreibung der Ausführungsbeispiele

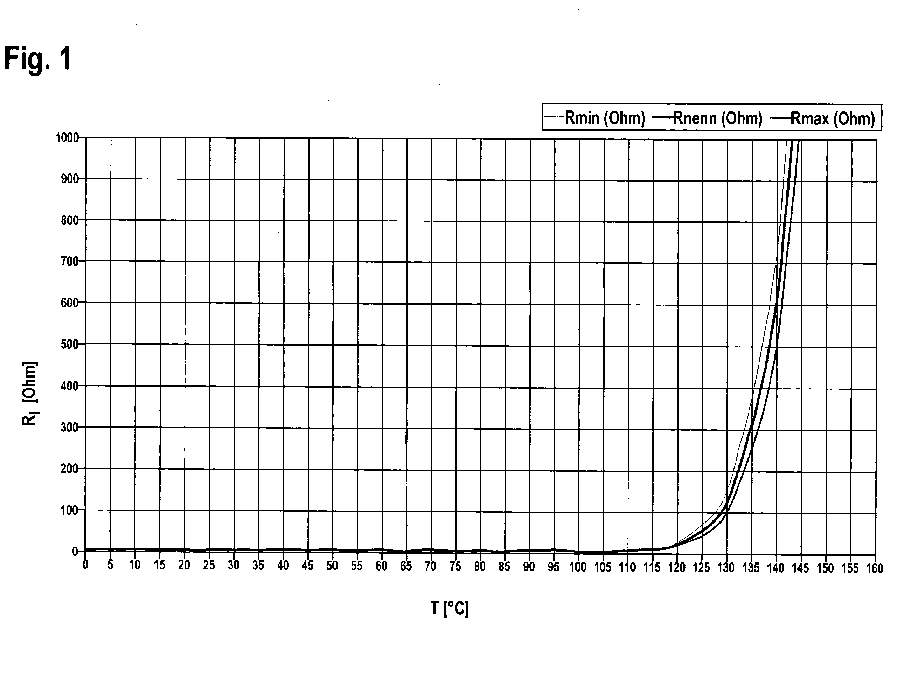

Aus **Fig. 1** geht die PTC-Charakteristik eines Tankheizers hervor. Mit steigender Temperatur erhöht sich der Innenwiderstand des PTC-Elements, sodass der Stromfluss abnimmt. Dieser positive Temperaturkoeffizient von PTC-Elementen bzw. PTC-Widerständen wird durch die Verwendung von stromleitenden Materialien, sogenannten Kaltleitern, erzielt, die bei tieferen Temperaturen den Strom besser leiten als bei hohen.

Der charakteristische Stromverlauf eines PTC-Tankheizers wird erfindungsgemäß genutzt, um eine Kavität in einem Tankheizer erkennen zu können, die sich bei gefrorenem Medium um den Tankheizer herum durch Absaugen von partiell aufgetautem Medium ergeben kann.

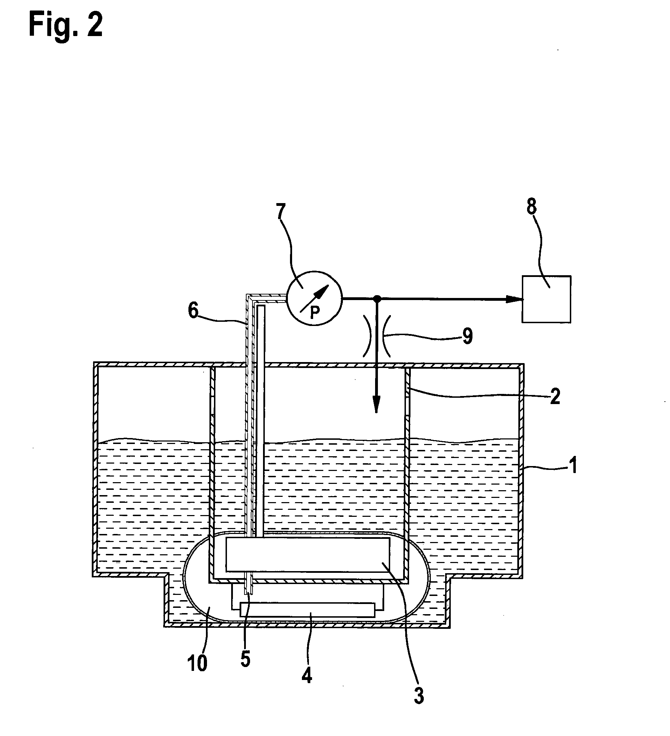

**Fig. 2** illustriert die Bildung einer Kavität in einem Reduktionsmitteltank, der mit Reduktionsmittel, insbesondere wässriger Harnstofflösung (HWL), gefüllt ist. Der Reduktionsmitteltank 1 umfasst einen inneren Heiztopf 2. Innerhalb des Heiztopfes 2 ist ein Tankheizer 3 angeordnet. Unterhalb des Tankheizers 3 ist ein Filter 4 vorgesehen, der gewährleistet, dass über die Ansaugstelle 5 flüssige Harnstofflösung durch das Saugrohr 6 mittels der HWL-Pumpe 7 zur Dosiereinrichtung 8 gesaugt wird. Über das Drosselventil 9 kann Reduktionsmittel zurück in den Reduktionsmitteltank 1 befördert werden.

Bei Temperaturen unterhalb des Gefrierpunktes der Harnstofflösung, insbesondere unterhalb von -11 °C, gefriert die Lösung im Reduktionsmitteltank 1. Um dennoch die Bereitstellung von flüssiger Lösung für die Abgasnachbehandlung zu gewährleisten, wird die Harnstofflösung durch den Tankheizer 3 aufgetaut. Sobald eine Minimalmenge der Lösung aufgetaut ist, kann das flüssige Medium über die Ansaugstelle 5 abgesaugt und der Dosiereinrichtung 8 zugeführt werden. Sofern insbesondere bei verhältnismäßig kurzem Fahrzyklus nur eine Teilmenge der Harnstofflösung aufgetaut wird und diese flüssige Lösung teilweise oder vollständig zur Abgasnachbehandlung entnommen wird, bildet sich um die Ansaugstelle 5 bzw. um den Heizer 3 ein Hohlraum bzw. eine Kavität 10. In dieser Kavität 10, die mit Gas bzw. Luft gefüllt ist, ist der Wärmestrom durch die Luftisolierung stark reduziert, sodass nicht mehr genügend Reduktionsmittel durch den Heizer 3 aufgetaut werden kann. Mittels einer Analyse des Heizerstroms, der eine PTC-Charakteristik aufweist, lässt sich der Zustand einer bestehenden Kavität im Reduktionsmitteltank 1 erfindungsgemäß detektieren. Da der Tankheizer 3 bei beginnender Kavität 10 Wärme nur noch in begrenztem Umfang an die Reduktionsmittellösung abgibt, heizt sich die Oberfläche des Tankheizers 3 auf und entsprechend der PTC-Charakteristik des Tankheizers reduziert sich der Strom. Durch Vergleich mit Referenzwerten, die einen Reduktionsmitteltank mit Reduktionsmittel ohne Kavitäten repräsentieren, lässt sich auf das Vorhandensein von Kavitäten schließen. Als Größen für den Referenzwert eignen sich besonders der Widerstand oder der Heizerstrom.

Um die Exemplarstreuung der Heizleistung des verbauten Tankheizers zu berücksichtigen, wird bei definierten Randbedingungen der Heizer vorzugsweise vermessen bzw. klassifiziert. Dazu wird der Heizer für wenige Sekunden bestromt. Die PTC-Charakteristik besitzt ein Widerstandsminimum, welches dabei durchlaufen wird und zu einem Strompeak führt. Über eine Analyse der Höhe des erfassten Strompeaks bei gegebener Spannung lässt sich der verbaute Heizer klassifizieren bzw. dessen minimaler Widerstand bestimmen. Mit diesem ermittelten minimalen Widerstand kann eine Stromschwelle festgelegt werden. Bei Unterschreiten des Heizerstroms während des Betriebs für eine applizierbare bzw. vorgebbare Minimaldauer kann auf eine Kavität geschlossen werden. Vorzugsweise kann hierbei ein Status gesetzt werden, über den sich verschiedene Reaktionen auslösen lassen, um das System vor einem Einbruch des Systemdrucks und einem damit verbundenen Fehlereintrag zu schützen. Insbesondere kann hierbei ein Dosiermengenstopp oder eine Dosiermengenbegrenzung bzw. - limitierung ausgelöst werden. Weiterhin kann beispielsweise ein Förderstopp für Reduktionsmittel und/oder eine Rückförderung von Reduktionsmittel in den Reduktionsmitteltank und/oder ein Verharren in sicherem Nachlaufzustand ausgelöst werden, um die Menge an flüssigem Reduktionsmittel im Reduktionsmitteltank zu erhöhen und so die Kavität teilweise oder ganz zu beseitigen und damit die Heizleistung wieder zu verbessern.

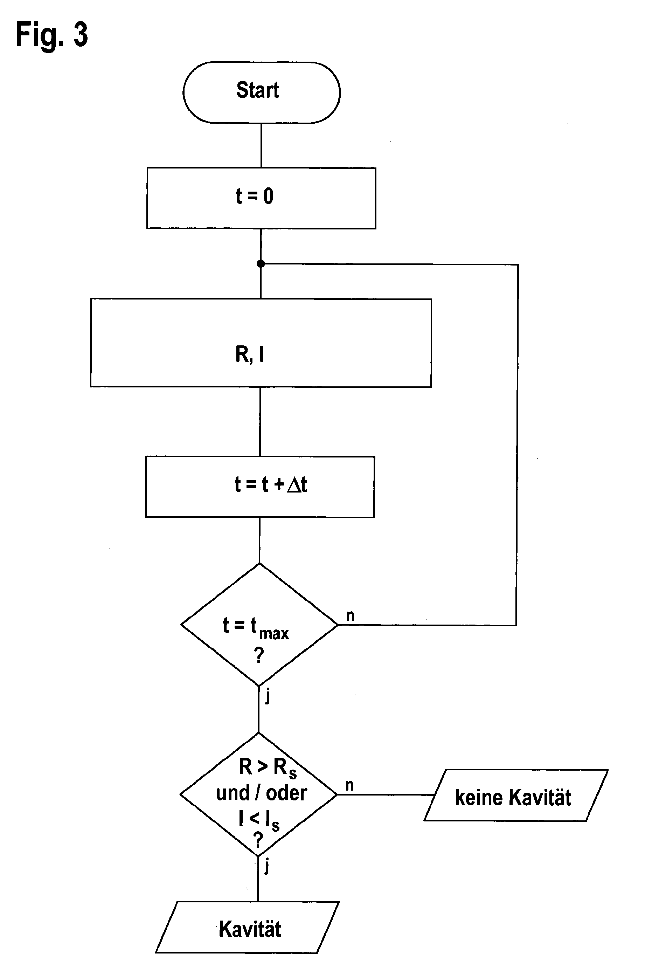

Aus **Fig. 3** geht ein schematisches Ablaufdiagramm zur Durchführung des erfindungsgemäßen Verfahrens hervor. Vor der Durchführung zur Erkennung von Kavitäten im Reduktionsmitteltank werden Schwellenwerte R_{S} und/oder I_{S} für den Innenwiderstand R und den Strom I vorgegeben. Bei der Durchführung des Verfahrens werden in einem vorgebbaren Zeitintervall zwischen t = 0 und t = tₘₐₓ Messwerte für den Innenwiderstand R und/oder den Strom I zu den Messzeitpunkten t = t + Δt aufgenommen. Sobald t = tₘₐₓ erreicht ist, wird geprüft, ob der maximale Wert des Innenwiderstandes R größer ist als der Schwellenwert R_{S} und/oder ob der maximale Wert für den Strom I kleiner ist als der Schwellenwert I_{S}. Sofern dies gegeben ist, wird auf eine Kavität geschlossen. Sofern dies nicht gegeben ist, wird darauf geschlossen, dass keine Kavität vorhanden ist.

## Patentansprüche

1. Verfahren zum Betrieb eines SCR-Katalysators zur Nachbehandlung von Abgasen einer Brennkraftmaschine, wobei ein Reduktionsmitteltank (1) mit Reduktionsmittel und eine Reduktionsmitteldosiereinrichtung (8) vorgesehen sind, und der Reduktionsmitteltank (1) wenigstens einen Tankheizer (3) mit PTC-Charakteristik aufweist, **dadurch gekennzeichnet, dass** zur Erkennung von Kavitäten (10) im Reduktionsmitteltank (1) mit gefrorenem Reduktionsmittel eine den Heizerstrom charakterisierende Größe erfasst wird und aus einem Abweichen des oder der erfassten Werte für die den Heizerstrom charakterisierende Größe von einem vorgebbaren Referenzwert, der einen Reduktionsmitteltank ohne Kavitäten repräsentiert, auf das Vorhandensein von Kavitäten (10) geschlossen wird, wobei die den Heizerstrom charakterisierende Größe ein Strom ist und dass bei Unterschreiten des vorgebbaren Referenzwertes auf das Vorhandensein von Kavitäten geschlossen wird.

2. Verfahren zum Betrieb eines SCR-Katalysators zur Nachbehandlung von Abgasen einer Brennkraftmaschine, wobei ein Reduktionsmitteltank (1) mit Reduktionsmittel und eine Reduktionsmitteldosiereinrichtung (8) vorgesehen sind, und der Reduktionsmitteltank (1) wenigstens einen Tankheizer (3) mit PTC-Charakteristik aufweist, **dadurch gekennzeichnet, dass** zur Erkennung von Kavitäten (10) im Reduktionsmitteltank (1) mit gefrorenem Reduktionsmittel eine den Heizerstrom charakterisierende Größe erfasst wird und aus einem Abweichen des oder der erfassten Werte für die den Heizerstrom charakterisierende Größe von einem vorgebbaren Referenzwert, der einen Reduktionsmitteltank ohne Kavitäten repräsentiert, auf das Vorhandensein von Kavitäten (10) geschlossen wird, wobei vor Erfassung einer den Heizerstrom charakterisierenden Größe der Tankheizer (3) vermessen wird, indem bei vorgebbaren Bedingungen die PTC-Charakteristik bestimmt wird.

3. Verfahren nach Anspruch 2, **dadurch gekennzeichnet, dass** die den Heizerstrom charakterisierende Größe ein Widerstand ist und dass bei Überschreiten des vorgebbaren Referenzwertes auf das Vorhandensein von Kavitäten geschlossen wird.

4. Verfahren nach einem der vorhergehenden Ansprüche, **dadurch gekennzeichnet, dass** bei erkannten Kavitäten (10) die Reduktionsmitteldosiermenge begrenzt und/oder gestoppt wird, die Förderung von Reduktionsmittel aus dem Reduktionsmitteltank (1) verringert und/oder gestoppt wird und/oder Reduktionsmittel in den Reduktionsmitteltank (1) zurückgefördert wird.

5. Computerprogramm, das alle Schritte eines Verfahrens gemäß einem der Ansprüche 1 bis 4 ausführt, wenn es auf einem Rechengerät oder einem Steuergerät abläuft.

6. Computerprogrammprodukt mit Programmcode, der auf einem maschinenlesbaren Träger gespeichert ist, zur Durchführung des Verfahrens gemäß einem der Ansprüche 1 bis 4, wenn das Programm auf einem Computer oder einem Steuergerät ausgeführt wird.

## Claims

1. Method for operating an SCR catalytic converter for the post-treatment of exhaust gases of an internal combustion engine, wherein a reducing agent tank (1) with reducing agent and a reducing agent metering device (8) are provided, and the reducing agent tank (1) has at least one tank heater (3) with a PTC characteristic, **characterized in that** a variable which characterizes the heater current is acquired in order to detect cavities (10) in the reducing agent tank (1) with frozen reducing agent, and the presence of cavities (10) is inferred from deviation of the detected value or values for the variable which characterizes the heater current from a predefinable reference value which represents a reducing agent tank without cavities, wherein the variable which characterizes the heater current is a current, and **in that** when the predefinable reference value is undershot the presence of cavities is inferred.

2. Method for operating an SCR catalytic converter for the post-treatment of exhaust gases of an internal combustion engine, wherein a reducing agent tank (1) with reducing agent and a reducing agent metering device (8) are provided, and the reducing agent tank (1) has at least one tank heater (3) with a PTC characteristic, **characterized in that** a variable which characterizes the heater current is acquired in order to detect cavities (10) in the reducing agent tank (1) with frozen reducing agent, and the presence of cavities (10) is inferred from deviation of the detected value or values for the variable which characterizes the heater current from a predefinable reference value which represents a reducing agent tank without cavities, wherein the tank heater (3) is measured before a variable which characterizes the heater current is detected, **in that** the PTC characteristic is determined under predefinable conditions.

3. Method according to Claim 2, **characterized in that** the variable which characterizes the heater current is a resistance, and **in that** when the predefinable reference value is exceeded the presence of cavities is inferred.

4. Method according to one of the preceding claims, **characterized in that** when cavities (10) are detected the reducing agent metering quantity is limited and/or stopped, the delivery of reducing agent from the reducing agent tank (1) is reduced and/or stopped, and/or reducing agent is fed back into the reducing agent tank (1).

5. Computer program which carries out all the steps of a method according to one of Claims 1 to 4 when it runs on a computing device or a control device.

6. Computer program product with program code which is stored on a machine-readable carrier, for carrying out the method according to one of Claims 1 to 4 when the program is executed on a computer or a control device.

## Revendications

1. Procédé de commande d'un catalyseur SCR pour le post-traitement de gaz d'échappement d'un moteur à combustion interne, dans lequel un réservoir d'agent réducteur (1) avec un agent réducteur et un dispositif de dosage d'agent réducteur (8) sont prévus, et le réservoir d'agent réducteur (1) présente au moins un dispositif de chauffage de réservoir (3) avec une caractéristique PTC, **caractérisé en ce que** pour détecter des cavités (10) dans le réservoir d'agent réducteur (1) contenant de l'agent réducteur gelé, une grandeur caractérisant le courant du dispositif de chauffage est détectée et l'on conclut que des cavités (10) sont présentes, à partir d'un écart de la ou des valeurs détectées pour la grandeur caractérisant le courant du dispositif de chauffage d'une valeur de référence prédéfinissable, qui représente un réservoir d'agent réducteur sans cavités, la grandeur caractérisant le courant du dispositif de chauffage étant un courant, et **en ce qu'**en cas de valeur en dessous de la valeur de référence prédéfinissable, on en conclut la présence de cavités.

2. Procédé de commande d'un catalyseur SCR pour le post-traitement de gaz d'échappement d'un moteur à combustion interne, dans lequel un réservoir d'agent réducteur (1) avec un agent réducteur et un dispositif de dosage d'agent réducteur (8) sont prévus, et le réservoir d'agent réducteur (1) présente au moins un dispositif de chauffage de réservoir (3) avec une caractéristique PTC, **caractérisé en ce que** pour détecter des cavités (10) dans le réservoir d'agent réducteur (1) contenant de l'agent réducteur gelé, une grandeur caractérisant le courant du dispositif de chauffage est détectée et l'on conclut que des cavités (10) sont présentes, à partir d'un écart de la ou des valeurs détectées pour la grandeur caractérisant le courant du dispositif de chauffage d'une valeur de référence prédéfinissable, qui représente un réservoir d'agent réducteur sans cavités, le dispositif de chauffage de réservoir (3) étant mesuré avant la détection d'une grandeur caractérisant le courant du dispositif de chauffage, en déterminant, dans des conditions prédéfinissables, la caractéristique PTC.

3. Procédé selon la revendication 2, **caractérisé en ce que** la grandeur caractérisant le courant du dispositif de chauffage est une résistance et **en ce qu'**en cas de dépassement de la valeur de référence prédéfinissable, on en conclut la présence de cavités.

4. Procédé selon l'une quelconque des revendications précédentes, **caractérisé en ce que** lorsque l'on a détecté des cavités (10), la quantité d'agent réducteur est limitée et/ou bloquée, le transport d'agent réducteur hors du réservoir d'agent réducteur (1) est réduit et/ou bloqué et/ou l'agent réducteur est refoulé dans le réservoir d'agent réducteur (1).

5. Programme informatique exécutant toutes les étapes d'un procédé selon l'une quelconque des revendications 1 à 4, lorsqu'il est exécuté sur un ordinateur ou un appareil de commande.

6. Produit de programme informatique avec code programme, qui est mémorisé sur un support lisible par machine, pour mettre en oeuvre le procédé selon l'une quelconque des revendications 1 à 4 lorsque le programme est exécuté sur un ordinateur ou un appareil de commande.
